**Europäisches Patentamt**

(19) **European Patent Office**

**Office européen des brevets**

(11) Publication number: **0 151 164**
**B1**

(12) **EUROPEAN PATENT SPECIFICATION**

(45) Date of publication of patent specification: **18.05.88**

(21) Application number: **84902841.0**

(22) Date of filing: **20.07.84**

(86) International application number:
**PCT/SE84/00266**

(87) International publication number:
**WO 85/00587 14.02.85 Gazette 85/04**

(51) Int. Cl.⁴: **C 04 B 40/02,** B 28 B 11/00,
E 04 G 21/06

(54) **A METHOD OF ACCELERATING THE HARDENING OF CONCRETE.**

(30) Priority: **21.07.83 SE 8304074**

(43) Date of publication of application:
**14.08.85 Bulletin 85/33**

(45) Publication of the grant of the patent:
**18.05.88 Bulletin 88/20**

(84) Designated Contracting States:
**AT CH DE GB LI NL**

(56) References cited:
**WO-A-79/00473**
**DE-B-1 915 563**
**FR-A-1 368 228**
**GB-A-1 388 242**
**GB-A-1 460 284**
**SE-A-8 002 613**
**SE-C- 148 204**

(73) Proprietor: **MALINOWSKI, Roman**
**Svealiden 3 D**
**S-431 39 Mölndal (SE)**

(72) Inventor: **MALINOWSKI, Roman**
**Svealiden 3 D**
**S-431 39 Mölndal (SE)**

(74) Representative: **Franzén, Lars Hjalmar et al**
**AWAPATENT AB Box 5117**
**S-200 71 Malmö (SE)**

Courier Press, Leamington Spa, England.

## Description

The present invention relates to a method of accelerating the hardening of concrete, based on Portland cement or other binders, by carbonation with a gas consisting wholly or partly of carbon dioxide, in which method the concrete is dewatered and/or deaerated prior to carbonation in a closed mould in which a sub-pressure has been established, and carbonation is commenced at the sub-pressure maintained in the concrete, the gas not reacting with the concrete binders, and/or the water vapour, being removed during continued carbonation, and the carbonation being repeated after the main carbonation.

The invention basically is a development of the method of rapidly hardening concrete disclosed in WO—A—79/00473.

WO—A—79/00473 indicates a method of casting and hardening concrete without the need of using a special curing chamber or autoclave, the concrete being cast or shaped after mixture of the components included, whereupon the mass is subjected to vacuum treatment by being exposed to a sub-pressure during casting in a mould. After that, and while at least initially maintaining the sub-pressure, carbon dioxide gas is introduced into the mass and then, because of said sub-pressure, diffuses into the capillaries in the concrete mass and accomplishes rapid hardening.

The most important factors in connection with concrete hardening by carbonation are the reactivity of the binders to the carbon dioxide gas, suitable water absorption mean values of the concrete mass and its suitable pore and capillary structure (including the aggregate), and the partial pressure of the carbon dioxide gas. Carbonation, i.e. the reaction between the binders which contain lime, magnesium etc., and the carbon dioxide, occurs only in the presence of water. If there is an excess of water, which always occurs in castable mixtures more rich in water, the carbonation may be very weak or entirely suppressed.

The vacuum treatment method according to WO—A—79/00473 makes it possible to remove the large amount of water from the mixture and, simultaneously, to provide a sub-pressure in the concrete mass, whereby the partial pressure of the carbon dioxide gas is increased. These two factors promote the carbonation process, i.e. the hardening of the concrete.

The prior art method referred to above functions satisfactorily as long as the carbon dioxide gas is pure. However, the carbonation of concrete with carbon dioxide gas containing greater or less quantities of air, or waste gases from, for example, cement or lime industries, is difficult or even impossible because the gas not reacting with the concrete binders and the vapour generated during the carbonation reaction extend the hardening time or completely inhibit carbonation.

This problem can, however, be eliminated in that the gas not reacting with the concrete binders, and/or the water vapour, is removed from the concrete during carbonation.

In order to increase the short-term strength of the concrete to maintain the final strength (as compared with normal hardening), the carbonation is repeated after the main carbonation.

The invention is a development of the method described above and is characterised in that after the main carbonation and prior to the repeated carbonation, the concrete is dried by radiation combined with sub-pressure.

The above-mentioned and further features of the invention will appear from the following description, reference being made to the accompanying drawings in which

Fig. 1 is a general flow diagram of the method according to the invention;

Fig. 2 illustrates schematically the different methods of removing the gas not reacting with the concrete binders, and/or the water vapour from the concrete;

Fig. 3 is a pressure/time diagram showing the vacuum carbonation in a closed mould, according to Figs. 2:1.1 and 2:1.2;

Fig. 4 is a corresponding diagram showing the carbonation without mould cover according to Fig. 2:1.3;

Fig. 5 also is a corresponding diagram showing repeated carbonation after the main carbonation in a closed mould, according to Figs. 2:1.1 and 2:1.2;

Fig. 6 is a pressure/time diagram showing repeated carbonation after drying with high-frequency electromagnetic waves (HF) on simultaneous vacuum action after the main carbonation in a closed mould, according to Fig. 2:1.1 or 2:1.2;

Fig. 7 also is a similar diagram showing continued repeated carbonation after drying with high-frequency electromagnetic waves (HF) of a concrete from which the mould has been partly stripped, according to Fig. 1:2.2, or a concrete from which the mould has been stripped completely, according to Fig. 1:1.4, suitable for carbonation on a belt;

Fig. 8 illustrates schematically precarbonation during mixture of the concrete components, while

Fig. 9 illustrates schematically precarbonation during the actual casting;

Fig. 10 shows an example of carbonation of sandwich elements in a battery, according to Figs. 1:1.1 and 1:1.2; and

Fig. 11 shows an example of repeated carbonation during flow-line production A according to Figs. 1:1.1 and 1:1.2, and production B according to Fig. 1:2.4.

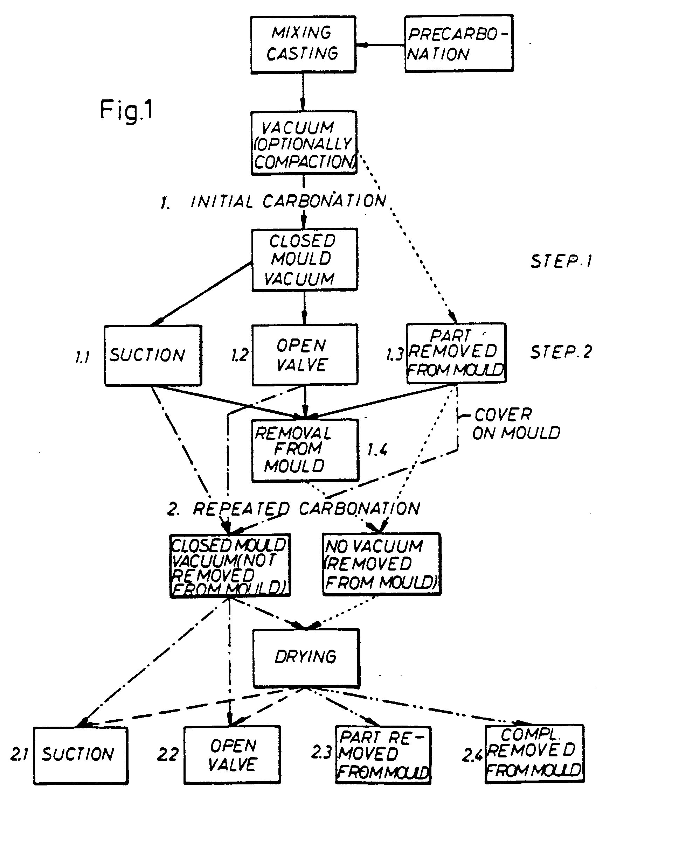

In the general flow diagram shown in Fig. 1, the method according to the invention is begun by dewatering and/or deaerating the concrete in a closed mould in which a sub-pressure or vacuum is maintained. If one then follows the full-line arrows, a main carbonation takes place in step 1 in which the

2

vacuum is maintained at least at the beginning of the supply of carbon dioxide gas to the closed mould, the gas not reacting with the concrete binders and/or the water vapour being removed from the concrete either by suction with the aid of sub-pressure 1.1 or by opening a valve in the mould 1.2. Alternatively, the main carbonation according to the dotted line can be carried out with concrete compacted under high pressure and vacuum, a part of the mould, preferably its cover, having been removed; see 1.3.

After removal of the gas and/or the water vapour, the mould can be stripped according to 1.4. Instead of stripping, the concrete may be subjected, after removal of the gas and/or the water vapour, to repeated carbonation in a closed mould and under vacuum prior to the supply of carbon dioxide gas. Naturally, it is also possible that the repeated carbonation takes place after stripping, as will appear from Fig. 1.

After the main carbonation and prior to the repeated carbonation, the concrete is dried by radiation combined with a sub-pressure. For this radiation, use is made of high-frequency electromagnetic waves (HF) which are the most effective for this purpose. After drying, the concrete is further carbonated in a closed mould, the non-reactive gas and/or the water vapour being further removed by suction according to 2.1 or an open valve according 2.2. Alternatively, the repeated carbonation after drying may be effected without vacuum of concrete partly removed from the mould (according to 2.3) or concrete completely removed from the mould (according to 2.4; see the double-dot arrows).

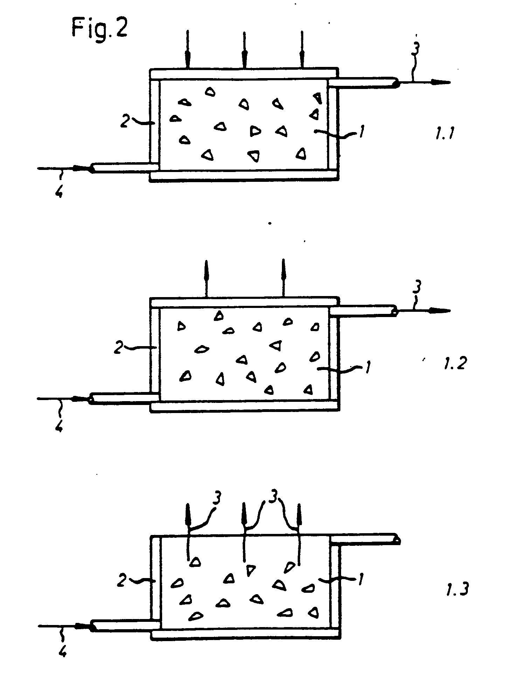

As has been mentioned above, Fig. 2 illustrates schematically the different methods of removing the gas not reacting with the concrete binders and/or the water vapour from the concrete. The concrete 1 is disposed in a mould 2, and the non-reacting gas 3 and/or the water vapour are removed by suction (vacuum) at the side opposite the carbon dioxide gas supply 4, as is shown by the arrows 3 in Fig. 2:1.1. In Fig. 2:1.2, the gas 3 is unobstructedly expelled through an open valve, as is also shown by arrows 3. In Figs. 2:1.1 and 2:1.2, the gas and the vapour are expelled in a closed mould. In Fig. 2:1.3, finally, the cover of the mould 2 has been removed to allow the gas to escape. This variant can be used only with concrete that has been compacted under high pressure and vacuum, the carbon dioxide gas having been supplied under a low excess pressure.

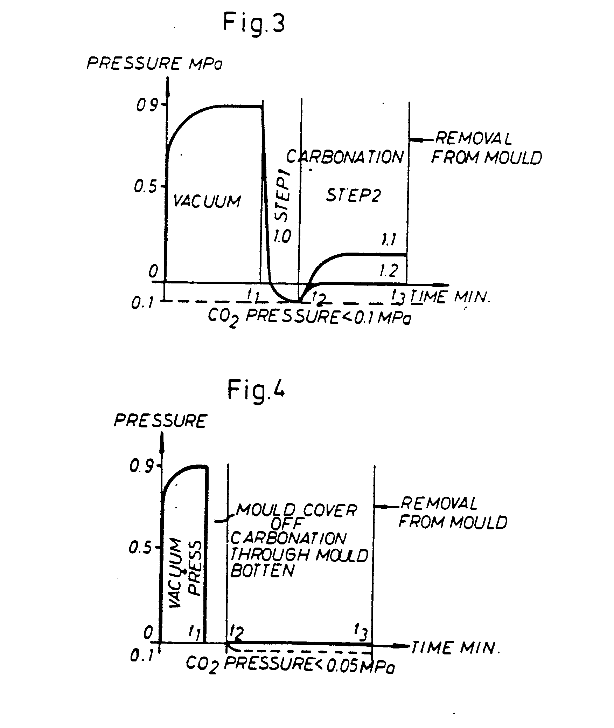

Fig. 3 shows a pressure/time diagram of the main carbonation in a closed mould, the carbon dioxide gas being supplied initially (step 1) under vacuum, whereupon the non-reacting gas and/or the water vapour are removed by suction (step 2) according to 1.1 or through an open valve according to 1.2, in the same manner as has been described above. The times $t_1$, $t_2$ and $t_3$ on the time axis may amount to, for example, $\leqq 10$ min., $\leqq 4$ min. and $\leqq 10$ min., respectively.

The diagram according to Fig. 4 illustrates carbonation when the mould cover has been removed, according to Fig. 2:1.3 (compacted concrete only). Here $t_1$ may be $\leqq 1$ min., $t_2 \leqq 0.5$ min. and $t_3 < 10$ min.

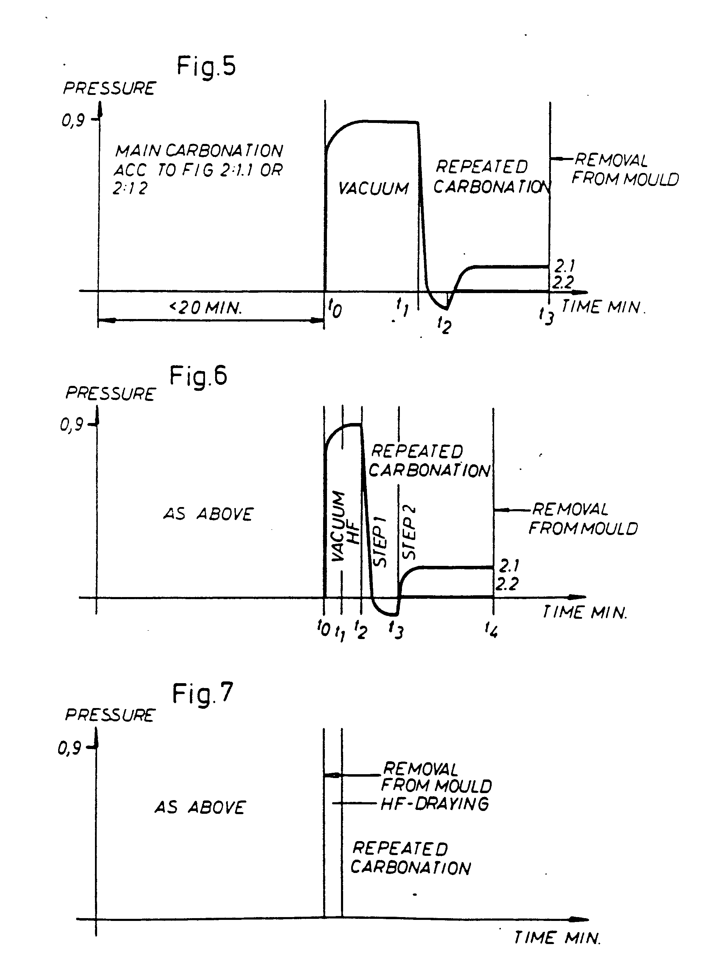

Fig. 5 shows how repeated carbonation can be carried out after the main carbonation in a closed mould according to Figs. 2:1.1 and 2:1.2 with, respectively, suction and open valve. Here $t_1$ may amount to, for example, $\leqq 5$ min., $t_2 \leqq 2$ min. and $t_3 \leqq 10$ min.

The repeated carbonation illustrated in Fig. 6 takes place after the HF drying (follows upon the main carbonation) in a closed mould, also under suction or with open valve, $t_1$ being for example $\leqq 2$ min., $t_2 \leqq 2$ min. and $t_3 + t_4 \leqq 10$ min.

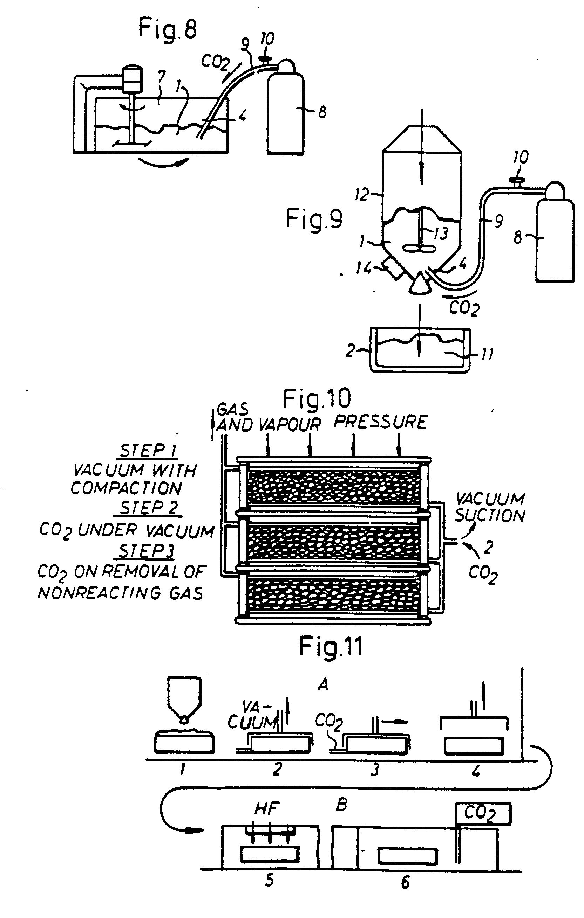

Fig. 7, finally, illustrates continued repeated carbonation after HF drying of the concrete partly removed from the mould, according to Fig. 1:1.3, or of the concrete completely removed from the mould, according to Fig. 1:2.4.

The precarbonation of the concrete 1, as shown in Figs. 8 and 9, may take place, according to Fig. 8, during mixing in a paddle mixer 7, carbon dioxide gas 4 being supplied from a container 8 via a hose 9 and a reduction valve 10. In Fig. 9, precarbonation takes place during casting of the concrete 1 in the mould 2, the precarbonated concrete being designated 11. The concrete 1 is kept in a container 12 for premixed dry concrete, and inside the container 12 an agitator 13 and outside the container a vibrator 14 are provided. As in Fig. 8, a container 8 with carbon dioxide gas is connected to the container 12 via a hose 9 and a valve 10 for supplying said carbon dioxide gas.

Fig. 10 illustrates schematically an example of the carbonation of sandwich elements stacked upon one another in batteries, the carbonation and the removal of the non-reacting gas being conducted in the manner illustrated in Figs. 1:1.1 and 1:1.2.

Finally, Fig. 11 shows an example of how repeated carbonation can be carried out during flow-line production of concrete elements according to Fig. 1. Casting following upon a possible precarbonation is effected at 1. At 2, the mould is subjected to a vacuum (optionally compaction), and at 3 the main carbonation and subsequent removal of the gas not reacting with the concrete binders and/or the water vapour takes place. Finally, the concrete is removed from the mould at 4. HF drying takes place at 5, preferably in a tunnel, whereupon the repeated carbonation takes place at 6, preferably also in a tunnel.

The following Tables show the results of tests conducted to establish the effect of different carbonation conditions on the strength after a short period of time and after 28 days (normal hardening after carbonation).

Table I shows the compressive strength in MPa at different $CO_2$ contents in the gas and different conditions for removing the non-reacting gas and the water vapour after a short period of time (directly after carbonation) and after 28 days. For these tests use was made of lightweight aggregate concrete having a density of 1400 kg/m$^3$. Gas containing 50% $CO_2$ reacted very weakly, and low direct strength was obtained after carbonation. Gas containing 25% $CO_2$ did not react at all during carbonation. This applies to hardening in a closed mould without removal of the non-reacting gas. Upon carbonation with an open valve in the upper mould part (step 2) upon continued supply of gas, the direct and final strength was satisfactory, both for gas containing 50% $CO_2$ and for gas containing 25% $CO_2$. Similar results were obtained upon suction with vacuum. It should be pointed out that a lower carbon dioxide content in the gas gave a longer carbonation time, and the amount of absorbed carbon dioxide upon removal of the non-reacting gas was more difficult to control, especially with vacuum.

TABLE I

| Carbonation conditions according to: | Compressive strength in MPa | | | | | |
|---|---|---|---|---|---|---|
| | Direct | 28 days | Direct | 28 days | Direct | 28 days |
| | 100% $CO_2$ | | 50% $CO_2$ | | 25% $CO_2$ | |
| Fig. 1 (step 1) | 5.1 (8) | 18.9 — | <0.5 (12) | 21.0 — | No carbonation (20) | |
| Fig. 1 (steps 1 + 2) 2:1.2 (open valve) | 5.7 (10) | 14.9 | 5.6 (14) | 18.5 | 3.5 (16) | 15.2 |
| Fig. 1 (steps 1 + 2) 2:1.3 (upper mould part removed) | 6.5 (8) | 14.9 | 4.3 (14) | 16 | 3.9 (14) | 15.8 |

Table II below shows the results obtained with carbonation tests of cement-bonded reinforced fiber-board (cement board). Different carbonation methods according to the invention, designated in accordance with Fig. 1 et seq. have been used: Carbonation and repeated carbonation. The concrete either had been compacted under vacuum or under vacuum and pressure (about 1 MPa) prior to carbonation. The carbonation was conducted with a gas containing 50% $CO_2$. The tensile strength in bending was tested immediately after the carbon dioxide treatment (8—18 min.), and after three days (normal air hardening). It was found that, compared with concrete that had been vacuum-compacted only and concrete that had been carbonated only, the direct strength and the strength after 3 days after compaction was increased further if repeated carbonation and HF drying had been carried out.

TABLE II

| Compacting and carbonation conditions according to: | Tensile strength in MPa | |
|---|---|---|
| | Direct | 3 days |
| Vacuum compaction Carbonation Fig. 1 (steps 1 + 2) 2:1.2 | 0.67 | 2.6 |
| Vacuum + Compaction Carbonation Fig. 1 (steps 1 + 2) 2:1.2 | 1.5 | 3.5 |
| Vacuum + Compaction Repeated carbonation Fig. 5 (2:2) | 2.1 | 3.4 |
| Vacuum + Compaction Repeated carbonation Fig. 6 (2:2) | 2.35 | 3.1 |
| Precarbonation Fig. 1 (steps 1 + 2) 2:1.2 | 2.1 | 3.6 |

# 0 151 164

The invention naturally is not restricted to the embodiments shown in the drawings and described above, but may be modified in several ways within the scope of the appended claims.

## Claims

1. A method of accelerating the hardening of concrete, based on Portland cement or other binders, by carbonation with a gas consisting wholly or partly of carbon dioxide, in which method the concrete is dewatered and/or deaerated prior to carbonation in a closed mould in which a sub-pressure has been established, and carbonation is commenced at the sub-pressure maintained in the concrete, the gas not reacting with the concrete binders, and/or the water vapour, being removed during continued carbonation, and the carbonation being repeated after the main carbonation, characterised in that, after the main carbonation and prior to the repeated carbonation, the concrete is dried by radiation combined with sub-pressure.

2. A method as claimed in claim 1, characterised in that the radiation and the subsequent repeated carbonation are applied to previously carbonated concrete wholly or partly removed from the mould.

3. A method as claimed in claim 1 or 2, characterised in that the radiation is in the form of high-frequency electromagnetic waves.

4. A method as claimed in any one of the preceding claims, characterised in that the concrete is precarbonated by supplying carbon dioxide gas during the mixing process and/or during casting of the concrete.

## Patentansprüche

1. Verfahren zur Beschleunigung des Härtens von Beton, der auf Portlandzement oder andere Bindemittel basiert ist, durch Carbonisieren mit einem völlig oder teilweise aus Kohlendioxyd bestehenden Gas, bei welchem Verfahren der Beton vor dem Carbonisieren in einer geschlossenen Form, in der ein Unterdruck vorherrscht, entwässert und/oder entlüftet wird, und das Carbonisieren bei dem im Beton aufrechterhaltenen Unterdruck begonnen wird, wobei das mit den Betonbindemitteln nicht reagierende Gas und/oder der Wasserdampf bei forgtesetztem Carbonisieren entfernt wird, und das Carbonisieren nach dem Hauptcarbonisieren wiederholt wird, dadurch gekennzeichnet, dass nach dem Hauptcarbonisieren und vor dem wiederholten Carbonisieren der Beton durch Strahlung in Kombination mit einem Unterdruck getrocknet wird.

2. Verfahren nach Anspruch 1, dadurch gekennzeichnet, dass die Strahlung und das darauffolgende, wiederholte Carbonisieren auf früher carbonisierten, völlig oder teilweise aus der Form entfernten Beton angewandt werden.

3. Verfahren nach Anspruch 1 oder 2, dadurch gekennzeichnet, dass die Strahlung aus hochfrequenten, elektromagnetischen Wellen besteht.

4. Verfahren nach einem der vorhergehenden Ansprüche, dadurch gekennzeichnet, dass der Beton durch Zufuhr von Kohlendioxydgas während des Vermischens und/oder während des Giessens des Betons vorcarbonisiert wird.

## Revendications

1. Procédé permettant d'accélérer la prise de béton basé sur le ciment portland ou d'autres liants, par carbonatation avec un gaz constitué entièrement ou en partie de dioxyde de carbone, procédé dans lequel le béton avant la carbonatation est déshydraté et/ou désaéré dans un moule fermé dans lequel a été établie une dépression, et dans lequel la carbonatation est commencée à la dépression maintenue dans le béton, le gaz ne réagissant avec les liants du béton, et/ou la vapeur d'eau, étant enlevé pendant la carbonatation poursuivie, et la carbonatation étant répétée après la carbonatation principale, caractérisé par le fait qu'après la carbonatation principale et avant la carbonatation répétée, le béton est séché par radiation en combinaison avec une dépression.

2. Procédé selon la revendication 1, caractérisé par le fait que la radiation et la carbonatation répétée suivante sont appliquées au béton antérieurement carbonaté et enlevé entièrement ou en partie du moule.

3. Procédé selon la revendication 1 ou 2, caractérisé par le fait que la radiation est en forme d'ondes électromagnétiques à haute fréquence.

4. Procédé selon l'une quelconque des revendications précédentes, caractérisé par le fait que le béton est précarbonaté par l'apport de gaz carbonique pendant le malaxage et/ou lors du coulage du béton.

Fig.1

| | MIXING CASTING | ← | PRECARBO- NATION |

VACUUM (OPTIONALLY COMPACTION)

1. INITIAL CARBONATION

CLOSED MOULD VACUUM    STEP.1

1.1 SUCTION    1.2 OPEN VALVE    1.3 PART REMOVED FROM MOULD    STEP.2

REMOVAL FROM MOULD    1.4    ⌐COVER ON MOULD

2. REPEATED CARBONATION

CLOSED MOULD VACUUM(NOT REMOVED FROM MOULD)    NO VACUUM (REMOVED FROM MOULD)

DRYING

2.1 SUCTION    2.2 OPEN VALVE    2.3 PART RE- MOVED FROM MOULD    2.4 COMPL. REMOVED FROM MOULD

1

Fig.2

1.1

1.2

1.3

# Fig.3

PRESSURE MPa

0 9

0.5

VACUUM

STEP1

CARBONATION

STEP2

REMOVAL FROM MOULD

1.0

0

1.1

1.2

0.1 ─ ─ ─ ─ $t_L$ ─ ─ $t_2$ ─ ─ $t_3$ TIME MIN.

$CO_2$ PRESSURE<0.1 MPa

# Fig.4

PRESSURE

0.9

0.5

VACUUM PRESS

MOULD COVER OFF CARBONATION THROUGH MOULD BOTTEN

REMOVAL FROM MOULD

0      $t_1$      $t_2$      $t_3$      TIME MIN.

0.1      $CO_2$ PRESSURE<0.05 MPa

3

**Fig.5**

PRESSURE

0,9

MAIN CARBONATION
ACC TO FIG 2·1.1 OR
2·1 2

VACUUM

REPEATED
CARBONATION

REMOVAL
FROM MOULD

2.1
2.2

$t_0$  $t_1$  $t_2$  $t_3$  TIME MIN.

<20 MIN.

**Fig.6**

PRESSURE

0,9

AS ABOVE

VACUUM
HF

REPEATED
CARBONATION

STEP 1
STEP 2

REMOVAL
FROM MOULD

2.1
2.2

$t_0$ $t_1$ $t_2$  $t_3$  $t_4$  TIME MIN.

**Fig.7**

PRESSURE

0,9

AS ABOVE

REMOVAL
FROM MOULD
HF-DRAYING

REPEATED
CARBONATION

TIME MIN.

4

Fig.8

CO₂

Fig.9

Fig.10

STEP 1
VACUUM WITH
COMPACTION
STEP 2
CO₂ UNDER VACUUM
STEP 3
CO₂ ON REMOVAL OF
NONREACTING GAS

GAS
AND VAPOUR PRESSURE

VACUUM
SUCTION

CO₂

Fig.11

A

VA-
CUUM

CO₂

HF

B

CO₂